# EUROPÄISCHE PATENTSCHRIFT

(11) **EP 2 928 056 B1**
(45) Veröffentlichungstag und Bekanntmachung des Hinweises auf die Patenterteilung: **25.03.2020**
(21) Anmeldenummer: 14162800.8
(22) Anmeldetag: 31.03.2014
(51) Int. Cl.: H02M 1/12, H02M 7/483

(54) **Verfahren und Vorrichtung zum Betreiben eines modularen Stromrichters mit einstellbarer Flankensteilheit der Schaltvorgänge in den Submodulen**
Method and apparatus for operating a modular power converter with adjustable slew rates of the switching operations in the sub-modules
Procédé et dispositif de fonctionnement d'un convertisseur de courant modulaire avec une grande vitesse de commutation ajustable

(43) Veröffentlichungstag der Anmeldung: 07.10.2015
(73) Patentinhaber: Siemens Aktiengesellschaft, 80333 München (DE)
(72) Erfinder: Friedrich, Christian, 66839 Schmelz / Hüttersdorf (DE)

(56) Entgegenhaltungen:
- WO-A1-2011/124260

## Beschreibung

Die Erfindung betrifft ein Verfahren zum Betreiben eines modularen Stromrichters mit einer Vielzahl von Submodulen, wobei der modulare Stromrichter an mindestens einem wechselspannungsseitigen Anschluss eine Wechselspannung durch Schalthandlungen von Leistungshalbleitern der Submodule erzeugt. Die Erfindung betrifft weiter einen modularen Stromrichter zur Anwendung des genannten Verfahrens.

Stromrichter werden dazu verwendet, elektrische Leistung bezüglich Spannungshöhe, Stromhöhe, Frequenz und Phasenlage umzuwandeln. Stromrichter für die Umwandlung von Wechselspannung in Gleichspannung bzw. von Wechselstrom in Gleichstrom werden als Gleichrichter bezeichnet. Demgegenüber bezeichnet man Stromrichter für die Umwandlung von Gleichspannung in Wechselspannung bzw. von Gleichstrom in Wechselstrom als Wechselrichter. Stromrichter für die Umwandlung von Leistungen mit Spannungen/Strömen einer Frequenz in eine andere Frequenz werden als (Frequenz-)Umrichter bezeichnet. Bei diesen (Frequenz-)Umrichtern erfolgt die Umwandlung dadurch, dass zunächst eine Gleichspannung oder ein Gleichstrom erzeugt wird und anschließend eine Umwandlung in die gewünschte Spannungsform oder Stromform mit entsprechender Amplitude, Frequenz und Phasenlage stattfindet.

Der Stromrichter erzeugt zur Erfüllung der oben beschriebenen Aufgaben aus einer Gleichspannung am Zwischenkreis eine Wechselspannung an dem mindestens einen wechselspannungsseitigen Anschluss. Diese Spannungserzeugung erfolgt durch Schalthandlungen von Leistungshalbleitern im Innern des Stromrichters. Dadurch lassen sich nahezu beliebige Wechselspannungen in Bezug auf Spannungshöhe, Frequenz und Phasenlage erzeugen. Dieses Verfahren der beschriebenen Spannungserzeugung kommt sowohl für den Betrieb als Gleichrichter wie auch für den Betrieb als Wechselrichter zur Anwendung.

Modulare Stromrichter werden bei Anwendungen mit höheren Spannungen (Mittelspannung/Hochspannung) oder bei besonders hohen EMV-Anforderungen genutzt. Diese Stromrichter weisen eine Vielzahl von Submodulen auf, die es erlauben, die Ausgangsspannung stufenförmig zu erzeugen. Damit kann eine gute Näherung an einen Sinusverlauf erzeugt werden, der im Vergleich zu 2-Punkt oder 3 Punkt-Stromrichter nur eine deutlich kleinere Filterschaltung benötigt. Die einzelnen Stufen können darüber hinaus pulsfrequent unter Nutzung der Pulsweitenmodulation erzeugt werden. Dabei wird zwischen zwei oder mehr Schaltzuständen eines Submoduls hochfrequent umgeschaltet, um im zeitlichen Mittel einen bestimmten Spannungswert zu realisieren. Dieses Verfahren erzeugt aufgrund der Schaltvorgänge deutlich höhere elektrische Verluste und verursacht Oberschwingungen in der Ausgangsspannung. Insbesondere in der Antriebstechnik kommt dieses Verfahren bei der Verwendung von modularen Stromrichtern zum Einsatz. Anwendungen in der Energieversorgung nutzen zumeist aufgrund der hohen Anzahl von Submodulen in den modularen Stromrichtern die reine Treppenform ohne den Einsatz der Pulsweitenmodulation, um die gewünschte Wechselspannung zu erzeugen.

Eine Realisierungsform eines modularen Stromrichter stellt der Modular Multilevel Converter (M2C) dar. Dieser ist bereits aus der DE 101 030 31 A1 bekannt. Bei diesem Aufbau kann eine Ausgangsspannung mit geringen Oberschwingungen erzeugt werden, da die mit dem modularen Multilevel-Stromrichter erzeugte Ausgangsspannung eine Treppenform darstellt. Filter zur Beseitigung von Oberschwingungen können bei diesem Stromrichter besonders klein und aufwandsarm realisiert werden.

Aus der WO 2011/124260 A1 ist ein Umrichter für die Anwendung in einer Hochspannungsgleichstromübertragung oder einer Blindleistungskompensation bekannt. Dieser Umrichter umfasst mindestens einen Kettenumrichter, der zwischen AC und DC Netzwerk angeordnet ist. Der Kettenumrichter beinhaltet eine erste und eine zweite Gruppe von Modulen, die in Serie angeordnet sind, wobei die einzelnen Module eine Vielzahl von primären Schaltelementen aufweisen, die mit mindestens einem Energiespeicher verbunden sind. Die primären Schaltelemente sind dabei derart steuerbar, dass die Kette von Modulen in Reihe eine gestufte variable Spannungsquelle bereitstellen kann.

Der Erfindung liegt die Aufgabe zugrunde, ein Verfahren zum Betreiben eines modularen Stromrichters anzugeben, das eine gewünschte Spannungsform einer Wechselspannung möglichst genau nachbildet und zugleich mit möglichst geringen elektrischen Verlusten behaftet ist und einen geringen Oberschwingungsanteil aufweist.

Diese Aufgabe wird durch ein Verfahren zum Betreiben eines modularen Stromrichters mit einer Vielzahl von Submodulen, wobei der modulare Stromrichter an mindestens einem wechselspannungsseitigen Anschluss eine Wechselspannung durch Schalthandlungen von Leistungshalbleitern der Submodule erzeugt, dadurch gelöst, dass ein Umschalten zwischen einer ersten Spannung und einer zweiten Spannung durch die Schalthandlungen der Leistungshalbleiter der Submodule mit einer unterschiedlichen Flankensteilheit erfolgt.

Die Aufgabe wird weiter durch einen modularen Stromrichter mit einer Vielzahl von Submodulen zur Anwendung des erfindungsgemäßen Verfahrens gelöst.

Die Erfindung bezieht sich somit auf ein Verfahren zum Betreiben eines modularen Stromrichters mit einer Vielzahl von Submodulen gemäß Anspruch 1 und einen hierzu korrespondierenden modularen Stromrichter gemäß Anspruch 8. Vorteilhafte Ausführungsformen sind in den abhängigen Ansprüchen definiert.

Der Erfindung liegt die Erkenntnis zugrunde, dass sich die Spannungsform der Wechselspannung eines wechselspannungsseitigen Anschlusses eines modularen Stromrichters dadurch optimieren lässt, dass das Umschalten der Spannungen an den Submodule dahingehend verändert wird, dass dieses mit einer verringerten Flankensteilheit ausgeführt wird. Dadurch geht die Treppenform der Wechselspannung durch Wegfall der nahezu senkrechten Flanken in einen mehr kontinuierlichen Verlauf über. Durch dieses Verfahren ist es möglich, eine gewünschte Spannungsform genauer nachzubilden.

Bei Modularen Stromrichtern mit Submodulen wird die Spannung an dem wechselspannungsseitigen Anschluss durch die Kombination von Spannungen an den Submodulen gebildet. Die Änderung der Spannung des wechselspannungsseitigen Anschlusses wird durch Schalthandlungen in den Submodulen bewirkt. Durch diese Schalthandlungen ändert sich die Spannung an den Klemmen des Submoduls. Die auf niedrige Verlustleistung optimierten Submodule schalten bisher mit einer sehr hohen Schaltgeschwindigkeit. Das heißt, die Umschaltung von einer ersten Spannung zu einer darauf folgenden zweiten Spannung erfolgt mit möglichst großer Flankensteilheit. Das erfindungsgemäße Verfahren beruht darauf, die Umschaltung von der ersten Spannung auf die zweite Spannung über ein Zeitverhalten zu realisieren, dass eine geringere Steilheit aufweist. Das Zeitverhalten für den Schaltvorgang zwischen einer ersten Spannung und einer zweiten Spannung kann dabei einer Rampe oder einem PT1 Verhalten entsprechen. Prinzipiell sind hier die verschiedensten Übergangsfunktionen realisierbar. Dabei kann sich die geringere Flankensteilheit in der Spannung an den Klemmen des Submoduls durch ein entsprechend langsames Schaltverhalten der Leistungshalbleiter ergeben oder es kann am Submodul ausgangsseitig an den Klemmen eine Schaltung vorgesehen werden, die ein entsprechendes Schaltverhalten an den Klemmen des Submoduls bewirkt.

Neben dem Schalten eines Submoduls mit einer einstellbaren Flankensteilheit hat sich auch das gleichzeitige Schalten mehrerer Submodule eines Phasenmoduls als sinnvoll erwiesen. Dabei überlagern sich zwei oder mehr unterschiedliche Flankensteilheiten zu einer resultierenden Flankensteilheit. Dabei kann die Ansteuerung der Submodule auch derart zeitversetzt erfolgen, dass der erste Schaltvorgang noch nicht abgeschlossen ist, d.h. dass die zweite Spannung noch nicht erreicht ist, bevor der zweite Schaltvorgang beginnt. Mit dieser Überlagerung von Schaltflanken ist es auf besonders einfache Weise möglich, Flankensteilheiten mit besonders niedriger Steilheit zu erzeugen, ohne dabei hohe Schaltverluste in Kauf nehmen zu müssen.

Es ist nicht zwingend erforderlich, dass der Umschaltvorgang von einer ersten Spannung zu einer zweiten Spannung abgeschlossen sein muss, bevor für dieses Submodul eine weitere Schalthandlung vorgenommen wird. Auch vor Abschluss einer ersten Schalthandlung kann bereits eine neue Schalthandlung vorgesehen werden.

Durch den Verzicht auf eine pulsfrequente Ansteuerung der Leistungshalbleiter ergibt sich eine deutliche Vereinfachung der Kommunikation, da keine hochfrequenten (Pulsfrequenz) Signale übertragen werden müssen (Grundfrequente Kommunikation) .

Bei der Vielzahl von Submodulen handelt es sich um mindestens zwei Submodule pro Stromrichterphase. Bei der Anwendung eines M2C Stromrichters weist dieser Umrichter pro Stromrichterphase genau zwei Stromrichterventile mit jeweils mindestens zwei Submodulen auf. Damit umfasst eine Stromrichterphase eines M2C Stromrichters mindestens vier Submodule pro Stromrichterphase.

Aufgrund der erzeugbaren Sinusform an den wechselspannungsseitigen Anschlüssen eignet sich diese Stromrichterschaltung im Besonderen auch für Mess- und Prüfzwecke, die eine besonders hohe Anforderung an die Spannungsform einer Spannungsquelle haben.

Vorteilhafte Ausgestaltungsformen der Erfindung sind in den abhängigen Ansprüchen angegeben.

Bei einer vorteilhaften Ausgestaltungsform erfolgt das Umschalten zwischen der ersten Spannung und der zweiten Spannung durch die Schalthandlungen der Leistungshalbleiter der Submodule mit vorgebbarer Flankensteilheit. Dabei hat es sich als besonders vorteilhaft erwiesen, für dieses Verfahren Leistungshalbleiter vorzusehen, deren Schaltverhalten mit Hilfe des Einsatzes von intelligenten Treiberschaltungen beeinflusst werden kann. Dabei ist die Treiberschaltung, auch als Ansteuerschaltung bezeichnet, dazu vorgesehen, das Schaltverhalten und insbesondere die Steilheit des Schaltvorgangs veränderbar zu gestalten. Dadurch kann gezielt Einfluss auf den Spannungsverlauf an den Klemmen des Submoduls während des Schaltvorgangs genommen werden. Weiterhin hat es sich als vorteilhaft erwiesen, wenn diese Treiberschaltung eine Schnittstelle zur übergeordneten Regelung/Steuerung aufweist, die eine Information über das zu realisierende Schaltverhalten überträgt. Damit erfolgt die Änderung der an den Klemmen des Submoduls anliegenden Spannung bei einer Schalthandlung von einem oder mehreren Leistungshalbleitern des Submoduls mit einer vorgebbaren Flankensteilheit.

Bei einer weiteren vorteilhaften Ausgestaltungsform wird die Flankensteilheit des Umschaltens zwischen der ersten Spannung und der zweiten Spannung durch die Schalthandlungen der Leistungshalbleiter der Submodule derart vorgegeben, gesteuert oder geregelt, dass die Wechselspannung am wechselspannungsseitigen Anschluss sich dem Verlauf einer vorgebbaren Referenzspannung annähert. Durch die Vorgabe einer Referenzspannung, die am wechselspannungsseitigen Anschluss des modularen Stromrichters eingestellt werden soll, hat die Steuerung/Regelung die Möglichkeit, die erforderlichen Flankensteilheiten für die Realisierung des Spannungsverlaufs zu bestimmen und über die Treiberschaltungen zu realisieren. Damit kann der Spannungsverlauf der Wechselspannung am wechselspannungsseitigen Anschluss gesteuert werden. Darüber hinaus ist es möglich, Messwerten wie beispielsweise die Spannung am wechselspannungsseiten Anschluss zu nutzen, um die Vorgabe der Flankensteilheit in Abhängigkeit des Messwertes und/oder der Referenzspannung geregelt auszuführen.

Bei einer weiteren vorteilhaften Ausgestaltungsform wird die Flankensteilheit des Umschaltens zwischen der ersten Spannung und der zweiten Spannung durch die Schalthandlungen der Leistungshalbleiter der Submodule derart vorgegeben, gesteuert oder geregelt, dass die Wechselspannung am wechselspannungsseitigen Anschluss sich einem sinusförmigen Verlauf annähert.

Der sinusförmige Verlauf ist ein typischer Verlauf der Wechselspannung am wechselspannungsseitigen Anschluss eines Stromrichters. Daher ist es sinnvoll, das Verfahren auf die Realsierung einer sinusförmigen Ausgangsspannung zu optimieren. Durch einen weitestgehend sinusförmigen Verlauf kann auf ein Filter zur Beseitigung von störenden Anteilen, wie beispielsweise Oberschwingungen, verzichtet werden.

Bei einer weiteren vorteilhaften Ausgestaltungsform erfolgt eine Auswahl der Submodule für die Schalthandlungen in Abhängigkeit der Temperatur der Leistungshalbleiter der Submodule und einer erwarteten, prognostizierten oder errechneten Verlustleistung der folgenden Schaltvorgänge derart, dass die Temperaturentwicklung der Submodule, insbesondere die Temperaturentwicklung der Leistungshalbleiter der Submodule, im zeitlichen Mittel gleich ist. Durch die unterschiedlichen Flankensteilheiten entstehen unterschiedliche elektrische Verluste in den Submodulen beim Betrieb des modularen Stromrichters. Durch gleichmäßige Verteilung der Schalthandlungen mit höheren Verlusten aufgrund geringerer Flankensteilheit auf die einzelnen Submodule kann eine gleichmäßige Verteilung der Verluste und damit eine im zeitlichen Mittel gleichmäßige Verteilung der Erwärmung erreicht werden. Die sich im zeitlichen Mittel einstellenden Temperaturen der Submodule, insbesondere die Temperatur der Leistungshalbleiter in der Sperrschicht sind dann bei allen Submodulen in etwa gleich.

Bei einer weiteren vorteilhaften Ausgestaltungsform weist der Stromrichter mindestens ein Phasenmodul auf, das eine Reihenschaltung von Submodulen umfasst, wobei eine Verbindung zwischen zwei der in Reihe geschalteten Submodule den wechselspannungsseitigen Anschluss darstellt. Unter Phasenmodul ist eine Anordnung zu verstehen, die elektrisch mit dem Zwischenkreis verbunden ist und eine Reihenschaltung von Submodulen aufweist. Darüber hinaus umfasst das Phasenmodul noch einen wechselspannungsseitigen Anschluss, an dem die Wechselspannung der entsprechenden Stromrichterphase anliegt. Durch die Reihenschaltung der Submodule eignet sich dieser Aufbau im besonderen für die Anwendung des erfindungsgemäßen Verfahrens der Erzeugung unterschiedlicher Schaltflanken, da ein solcher modularer Stromrichter stufenförmig betreibbar ist und das erfindungsgemäße Verfahren die Stufen derart verändert, dass die Wechselspannung am wechselspannungsseitigen Anschluss sich einem vorgebbaren Spannungsverlauf, insbesondere einem Sinusverlauf, annähert.

Bei einer weiteren vorteilhaften Ausgestaltungsform weist der modulare Stromrichter
- einen Gleichspannungsanschluss ,
- mindestens einen wechselspannungsseitigen Anschluss und
- mindestens ein Phasenmodul auf,
wobei das Phasenmodul eine Reihenschaltung von einem ersten und einem zweiten Stromrichterventil aufweist, wobei eine elektrische Verbindung zwischen dem ersten und dem zweiten Stromrichterventil den wechselspannungsseitigen Anschluss darstellt, wobei die Anschlüsse des Phasenmoduls mit dem Gleichspannungsanschluss elektrisch verbunden sind, wobei das erste und das zweite Stromrichterventil jeweils wenigstens zwei Submodule aufweisen, die elektrisch in Reihe angeordnet sind, wobei die Submodule mindestens einen Kondensator und mindestens einen Leistungshalbleiter aufweisen. Das erfindungsgemäße Verfahren ist insbesondere für den M2C Umrichter geeignet, der durch die oben genannten Merkmale beschrieben wird. Der Umrichter eignet sich sowohl für Antriebsanwendungen als auch zum Anschluss an ein Energieversorgungsnetz. Die Submodule des Umrichters werden von einer Regelung angesteuert, die auf einfache Weise auch die Regelung/Steuerung der Flankensteilheiten übernehmen kann. Auf eine pulsfrequente Ansteuerung bei Aufbauten mit wenigen Submodulen, wie sie in der Antriebstechnik zur Anwendung kommen, kann mit Hilfe des erfindungsgemäßen Verfahrens verzichtet werden. Auch beim Betrieb mit einer gestuften Spannung, wie beispielsweise bei Anwendungen in Energieversorgungsnetzen zur Energieübertragung, z.B. Hochspannungsgleichstromübertragung (HGÜ), Blindleistungskompensation oder aktiver Filterung, kann der Spannungsverlauf ohne Erhöhung der Anzahl von Submodulen teilweise sogar deutlich verbessert werden.

Bei einer weiteren vorteilhaften Ausgestaltungsform weisen die einzelnen Submodule eines jeden Stromrichterventils beim Umschalten zwischen der ersten Spannung und der zweiten Spannung jeweils eine fest eingestellte, unterschiedliche Flankensteilheit auf. Bei dieser Anordnung ergibt sich die unterschiedliche Spannungssteilheit nicht aufgrund von unterschiedlichen Ansteuersignalen aus der Treiberschaltung. Bei diesem Aufbau wird jedem Submodul eine bestimmte Flankensteilheit beim Schalten fest vorgegeben. Dies kann durch einen festen Wert in der Treiberschaltung erfolgen oder bereits durch den Hardwareaufbau festgelegt sein. Es bietet sich darüber hinaus auch an, Leistungshalbleiter mit unterschiedlicher Schaltcharakteristik zu verwenden, die zu einem unterschiedlichen Schaltverhalten des Leistungshalbleiters führen. Als Alternative kann bei gleichem Schaltverhalten der Leistungshalbleiter ein unterschiedlicher Aufbau der Submodule verwendet werden. Ein durch die Leistungshalbleiter schneller Schaltvorgang kann durch eine geeignete Schaltung verzögert an die Anschlüsse des Submoduls übertragen werden. Die Verzögerung kann beispielsweise durch ein PT1 Verhalten oder einer Rampenbildung ausgeführt werden.

Im Folgenden wird die Erfindung anhand der in den Figuren dargestellten Ausführungsbeispiele näher beschreiben und erläutert. Es zeigen:
- FIG 1: eine Phase eines erfindungsgemäßen modularen Stromrichters
- FIG 2: ein dreiphasiger erfindungsgemäßer modularer Stromrichter
- FIG 3: ein Submodul des modularen Stromrichters
- FIG 4: einen Zeitverlauf der Schalthandlung eines Submoduls bei Anwendung des erfindungsgemäßen Verfahrens
- FIG 5: einen Zeitverlauf der Wechselspannung des modularen Stromrichters und
- FIG 6: einen weiteren Zeitverlauf der Wechselspannung des modularen Stromrichters.

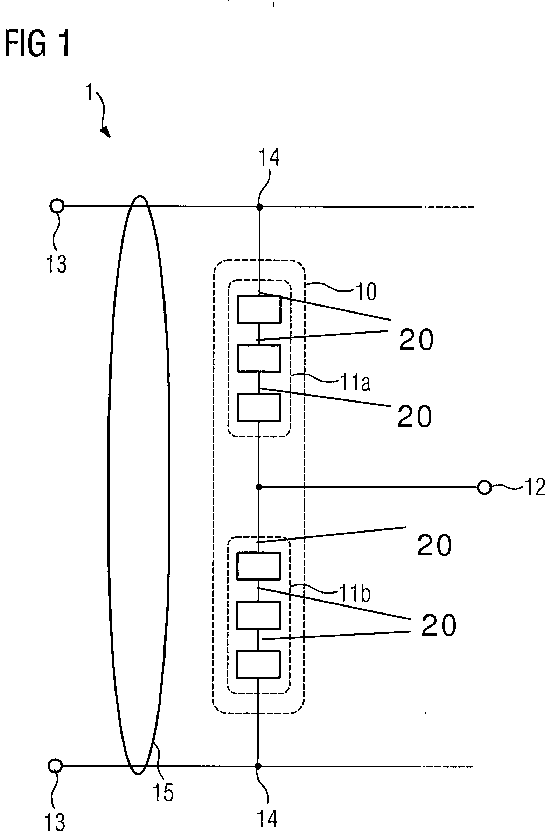

Die FIG 1 zeigt ein Ausführungsbeispiel eines modularen Multilevelstromrichters (M2C). Dieser ist in diesem Ausführungsbeispiel mit einem wechselspannungsseitigen Anschluss 12 ausgeführt. Auf der Gleichspannungsseite weist dieser modulare Stromrichter 1 einen Gleichspannungsanschluss 13 auf. Der Gleichspannungsanschluss 13 umfasst einen positiven und einen negativen Anschluss. Das Phasenmodul 10 ist mit seinen Anschlüssen 14 mit dem Zwischenkreis 15 verbunden. Das Phasenmodul 10 umfasst eine Reihenschaltung aus einem ersten Stromrichterventil 11a und einem zweiten Stromrichterventil 11b. Die einzelnen Stromrichterventile 11a und 11b weisen eine Reihenschaltung von Submodulen 20 auf. Der Verbindungspunkt zwischen dem ersten Stromrichterventil 11a und dem zweiten Stromrichterventil 11b stellt den wechselseitigen Anschluss 12 dar. Es hat sich für die Regelung von Strömen als positiv erwiesen, wenn zwischen wechselspannungsseitigem Anschluss 12 und den beiden Stromschienen des Zwischenkreises 15 jeweils Induktivitäten angeordnet sind. Diese sind in der FIG 1 nicht dargestellt. Ihre Aufgabe ist es, die Regelbarkeit von Strömen des modularen Multilevelstromrichters zu verbessern. Der in FIG 1 dargestellte modulare Stromrichter 1 kann durch die Parallelschaltung weiterer Phasenmodule 10 zu dem bereits vorhandenen Phasenmodul 10 um weitere wechselspannungsseitige Anschlüsse 12 auf einfache Weise erweitert werden.

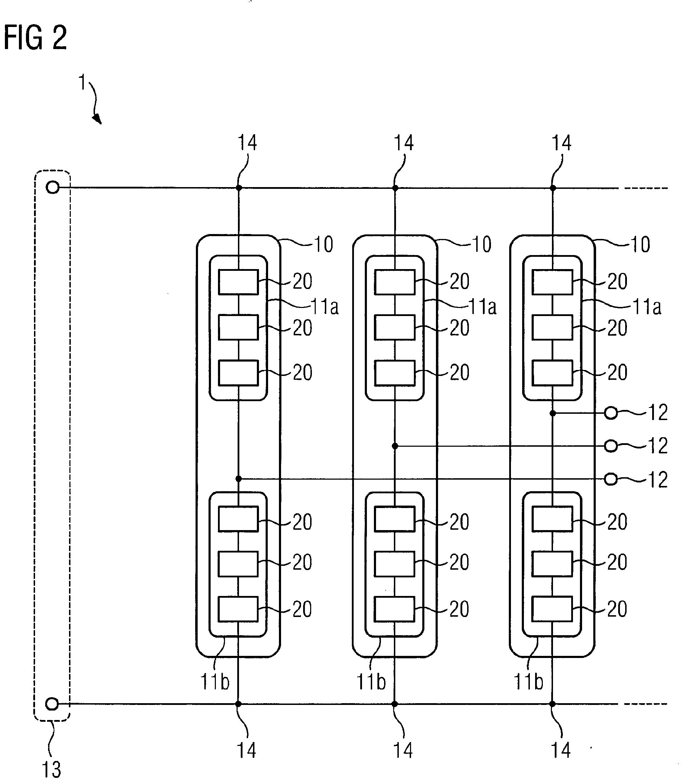

Die FIG 2 zeigt ein weiteres Ausführungsbeispiel des erfindungsgemäßen modularen Stromrichters 1. Zur Vermeidung von Wiederholungen bezüglich übereinstimmender Bestandteile des Stromrichters 1 wird auf die Beschreibung zur FIG 1 und die dort eingeführten Bezugszeichen verwiesen. Im Gegensatz zum vorhergehenden Ausführungsbeispiel ist dieser Aufbau des modularen Stromrichters 1, der auch wieder einem M2C Stromrichter entspricht, mit dreiphasigen wechselspannungsseitigen Anschlüssen 12 ausgeführt. Diese sind insbesondere zum Anschluss an ein Energieversorgungsnetz geeignet. Das Energieversorgungsnetz stellt dabei ein Drehstromnetz dar. Ebenso können mit den drei wechselspannungsseitigen Anschlüssen 12 elektrische Verbraucher, wie beispielsweise Motoren, gespeist werden, die zur Steuerung ihrer Drehzahl und ihres Drehmomentes eine in Spannungshöhe und Frequenz veränderbare Spannungsquelle benötigen. Aufgrund des Spannungsverlaufes am Ausgang, der hinreichend gut einen Sinusverlauf nachbilden kann, können diese Verbraucher ohne eine Filterschaltung betrieben werden.

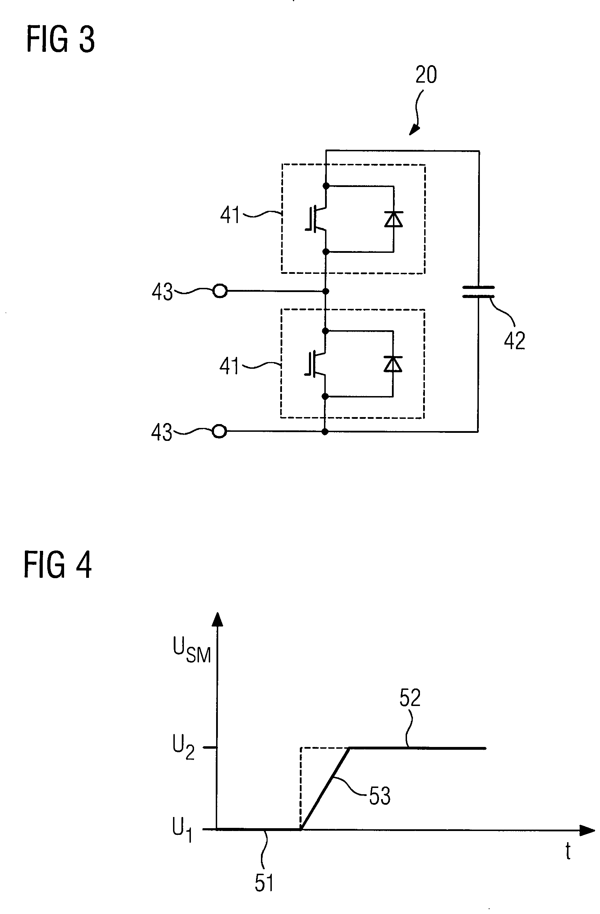

FIG 3 zeigt den Aufbau eines Submoduls 20 mit einer Halbbrückenschaltung. Die Halbbrückenschaltung weist eine Reihenschaltung zweier Leistungshalbleiter 41 auf. Die Leistungshalbleiter 41 umfassen wiederum eine Parallelschaltung eines abschaltbaren Leistungshalbleiterschalters und einer dazu antiparallel geschalteten Diode. Parallel zu der Reihenschaltung der beiden Leistungshalbleiter 41 ist ein Kondensator 42 angeordnet. An den Anschlussklemmen 43 des Submoduls 20 kann je nach Schaltzustand der Leistungshalbleiter 41 die Spannung 0 oder die Spannung am Kondensator 42 erzeugt werden. Dabei ist eine Anschlussklemme 43 des Submoduls mit dem Verbindungspunkt der beiden in Reihe geschalteten Leistungshalbleiter 41 verbunden. Die zweite Anschlussklemme des Submoduls 20 ist mit einem Anschlusspunkt der Reihenschaltung der beiden Leistungshalbleiter 41 verbunden. Zwischen den Anschlussklemmen und dem Halbleiter kann eine Schaltung zur Verringerung der Flankensteilheit der Spannung an den Anschlussklemmen 43 eingefügt werden. In einem einfachen Fall entspricht diese beispielsweise einem RC Glied, mit dem einfach ein PT1-Verhalten erzeugen kann. Auch eine Schaltung zur Erzeugung einer Rampe hat sich als vorteilhaft erwiesen.

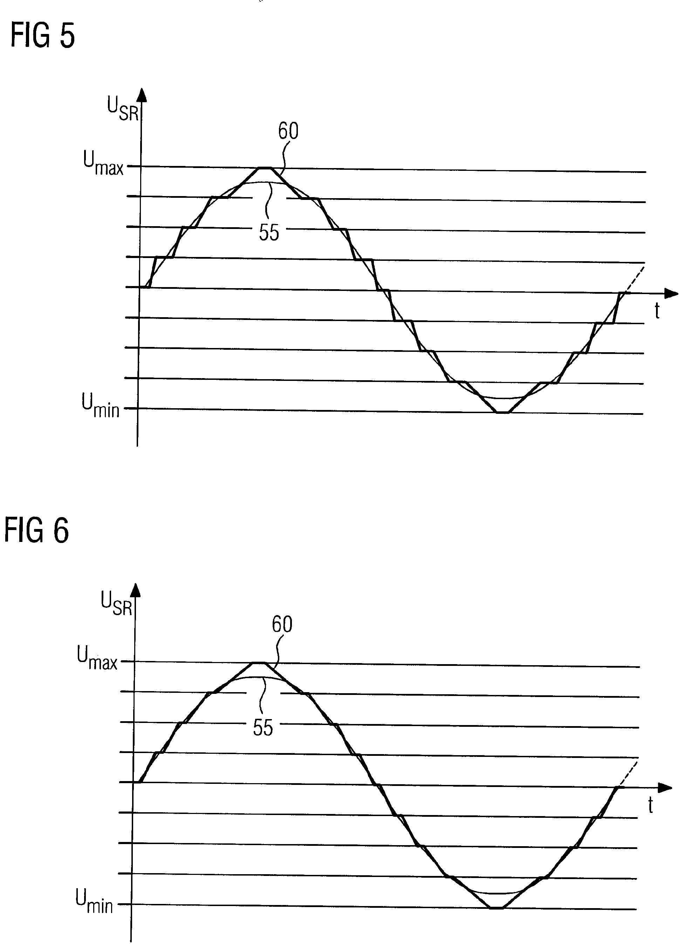

FIG 4 zeigt den zeitlichen Verlauf der Spannung U_{SM} an den Anschlussklemmen 43 des Submoduls 20 während des Umschaltens zwischen einer ersten Spannung 51 und einer zweiten Spannung 52. Bei bereits bekannten Submodulen erfolgt das Umschalten schnell mit einer großen Flankensteilheit. Dies ist in FIG 5 als gestrichelte Linie dargestellt. Bei idealer senkrechter Schaltflanke ist die Verlustleistung des Schaltvorgangs gleich null. Bei dem erfindungsgemäßen Verfahren wird die Steilheit der Schaltflanke, auch als Flankensteilheit 53 bezeichnet, reduziert. Das heißt, der Zeitverlauf des Umschaltens wird flacher. Mit dieser reduzierten Flankensteilheit 53 lässt sich leicht der Verlauf einer gewünschten Spannung am wechselspannungsseitigen Anschluss 12 des modularen Stromrichters 1 erzeugen. Dafür können auch die höheren elektrischen Verluste des Schaltvorgangs in Kauf genommen werden, da näherungsweise ein gewünschter Spannungsverlauf durch dieses Verfahren erzeugbar ist.

Der in dieser FIG 4 dargestellte Übergang von der ersten Spannung 51 zur zweiten Spannung 52 ist als Rampe ausgeführt. Es haben sich daneben weitere Spannungsverläufe für den Übergang, wie beispielsweise ein PT1-Verhalten, als vorteilhaft erwiesen.

FIG 5 zeigt den Zeitverlauf 60 einer Spannung U_{SR} am wechselspannungsseitigen Anschluss 12 des modularen Stromrichters 1. Dabei ist in diesem Ausführungsbeispiel der modulare Stromrichter 1 als ein M2C Stromrichter ausgeführt. Dieser weist in den Stromrichterventilen 11a, 11b eine Reihenschaltung von jeweils 8 Submodulen mit idealerweise gleicher Spannung am Kondensator 42 der Submodule 20 auf. Damit ist die Spannung U_{SR} über 9 Spannungsniveaus nachbildbar. Diese sind in der FIG 5 gestrichelt dargestellt, wobei auch die Nulllinie ein Spannungsniveau darstellt. Die vorgebbare Referenzspannung 55, die am wechselspannungsseitigen Anschluss 12 erzeugt werden soll, stellt einen Sinusverlauf dar. Es ist zu erkennen, dass mit dem erfindungsgemäßen Verfahren ein Zeitverlauf 60 erzeugbar ist, der näherungsweise dem der vorgebbaren Referenzspannung 55 entspricht. Zumindest ist die Abweichung des Zeitverlaufs 60 der Spannung U_{SR} von der Referenzspannung kleiner, als bei einer Erzeugung der Spannung U_{SR} durch eine Stufenfunktion, wie aus dem Stand der Technik bekannt. Der Grad der Annäherung stellt einen Kompromiss dar zwischen geringen Flankensteilheiten, mit denen unter Inkaufnahme von elektrischen Verlusten die Abweichung zu einer vorgebbaren Referenzspannung 55 minimiert werden kann und den elektrischen Verlusten des modularen Stromrichters 1. Dazu zeigt FIG 6 einen weiteren Zeitverlauf 60 der Spannung U_{SR} am wechselspannungsseitigen Anschluss 12 des modularen Stromrichters 1. Dieser unterscheidet sich von dem Zeitverlauf 60 der FIG 5 dadurch, dass die in FIG 6 verwendeten Submodule 20 mit einer geringeren Flankensteilheit 53 betrieben werden. Durch diese geringere Flankensteilheit 53 ist es möglich, die Abweichungen von der vorgebbaren Referenzspannung weiter zu verringern. Allerdings steigen durch die Schaltvorgänge der Leistungshalbleiter 41 mit geringerer Flankensteilheit die Verluste im Vergleich zu dem Ausführungsbeispiel der FIG5 an.

Es hat sich ebenfalls als vorteilhaft erwiesen, wenn als weitere Alternative der gesamte Zeitverlauf 60 der Spannung U_{SR} am wechselspannungsseitigen Anschluss 12 zumindest abschnittsweise nur Flanken aufweist und keine konstanten Anteile. Mit konstanten Anteilen sind Zeitintervalle gemeint, die einen waagerechten zeitlichen Verlauf haben.

## Patentansprüche

1. Verfahren zum Betreiben eines modularen Stromrichters (1) mit einer Vielzahl von Submodulen (20), wobei der modulare Stromrichter (1) an mindestens einem wechselspannungsseitigen Anschluss (12) eine Wechselspannung durch Schalthandlungen von Leistungshalbleitern (41) der Submodule (20) erzeugt, und ein Umschalten zwischen einer ersten Spannung (51) und einer zweiten Spannung (52) durch die Schalthandlungen der Leistungshalbleiter (41) der Submodule (20) mit einer unterschiedlichen Flankensteilheit (53) erfolgt,
**dadurch gekennzeichnet, dass** das Umschalten durch ein entsprechend langsames Schaltverhalten der Leistungshalbleiter (41) derart erfolgt, dass das Zeitverhalten für den Schaltvorgang zwischen der ersten Spannung (51) und der zweiten Spannung (52) einer Rampe mit kontinuierlichem Verlauf entspricht.

2. Verfahren zum Betreiben eines modularen Stromrichters (1) nach Anspruch 1, **dadurch gekennzeichnet, dass** das Umschalten zwischen der ersten Spannung (51) und der zweiten Spannung (52) durch die Schalthandlungen der Leistungshalbleiter (41) der Submodule (41) mit vorgegebener Flankensteilheit (53) erfolgt.

3. Verfahren zum Betreiben eines modularen Stromrichters (1) nach einem der Ansprüche 1 oder 2, **dadurch gekennzeichnet, dass** die Flankensteilheit (53) des Umschaltens zwischen der ersten Spannung (51) und der zweiten Spannung (52) durch die Schalthandlungen der Leistungshalbleiter (41) der Submodule (20) derart vorgegeben, gesteuert oder geregelt wird, dass die Wechselspannung am wechselspannungsseitigen Anschluss (12) sich dem Verlauf einer vorgebbaren Referenzspannung (55) annähert.

4. Verfahren zum Betreiben eines modularen Stromrichters (1) nach einem der Ansprüche 1 oder 2, **dadurch gekennzeichnet, dass** die Flankensteilheit (53) des Umschaltens zwischen der ersten Spannung (51) und der zweiten Spannung (52) durch die Schalthandlungen der Leistungshalbleiter (41) der Submodule (20) derart vorgegeben, gesteuert oder geregelt wird, dass die Wechselspannung am wechselspannungsseitigen Anschluss (12) sich einem sinusförmigen Verlauf annähert.

5. Verfahren zum Betreiben eines modularen Stromrichters (1) nach einem der Ansprüche 1 bis 4, **dadurch gekennzeichnet, dass** eine Auswahl der Submodule (20) für die Schalthandlungen in Abhängigkeit von der Temperatur der Leistungshalbleiter der Submodule und in Abhängigkeit von einer erwarteten, prognostizierten oder errechneten Verlustleistung der folgenden Schaltvorgänge derart erfolgt, dass die Temperaturen der Submodule (20), insbesondere die Temperaturen der Leistungshalbleiter (41) der Submodule (20), während des Betriebs des modularen Stromrichters (1) im zeitlichen Mittel gleich sind.

6. Verfahren zum Betreiben eines modularen Stromrichters (1) nach einem der Ansprüche 1 bis 5, **dadurch gekennzeichnet, dass** die Steilheit des Schaltvorgangs mittels der Ansteuerschaltung der Leistungshalbleiter (41) verändert wird.

7. Verfahren zum Betreiben eines modularen Stromrichters (1) nach einem der Ansprüche 1 bis 6, **dadurch gekennzeichnet, dass** das Umschalten der Spannungen an den Submodulen derart verändert wird, dass die senkrechten Flanken wegfallen.

8. Modularer Stromrichter (1) mit einer Vielzahl von Submodulen (20) zur Durchführung des Verfahrens nach einem der Ansprüche 1 bis 7, wobei der modulare Stromrichter
- einen Gleichspannungsanschluss (13),
- mindestens einen wechselspannungsseitigen Anschluss (12) und
- mindestens ein Phasenmodul (10) aufweist,
wobei das Phasenmodul (10) eine Reihenschaltung von einem ersten und einem zweiten Stromrichterventil (11a, 11b) aufweist, wobei eine elektrische Verbindung zwischen dem ersten und dem zweiten Stromrichterventil (11a, 11b) den wechselspannungsseitigen Anschluss (12) darstellt, wobei Anschlüsse (14) des Phasenmoduls (10) mit dem Gleichspannungsanschluss (13) elektrisch verbunden sind, wobei das erste und das zweite Stromrichterventil (11a, 11b) jeweils wenigstens zwei der Submodule (20) aufweisen, die elektrisch in Reihe angeordnet sind, wobei die Submodule (20) mindestens einen Kondensator (42) und mindestens zwei Leistungshalbleiter (41) aufweisen, wobei die Leistungshalbleiter derart ausgebildet sind, dass deren Schaltverhalten mit Hilfe des Einsatzes von intelligenten Ansteuerschaltungen beeinflusst werden kann, und diese Ansteuerschaltungen eingerichtet sind, das Umschalten zwischen der ersten und zweiten Spannung mit veränderbarer Steilheit zu gestalten, wobei die Submodule Mittel zur Erzielung eines langsamen Schaltverhaltens der Leistungshalbleiter aufweisen, und das Umschalten der Leistungshalbleiter dabei derart erfolgt, dass das Zeitverhalten für den Schaltvorgang zwischen der ersten Spannung und der zweiten Spannung einer Rampe mit kontinuierlichem Verlauf entspricht.

9. Modularer Stromrichter (1) nach Anspruch 8, wobei die Submodule (20) genau einen Kondensator (42) aufweisen.

10. Modularer Stromrichter (1) nach Anspruch 9, wobei die Submodule (20) genau zwei Leistungshalbleiter (41) aufweisen.

## Claims

1. Method for operating a modular current converter (1) with a plurality of submodules (20), wherein the modular current converter (1) generates an AC voltage at at least one AC voltage-side terminal (12) by way of switching operations of power semiconductors (41) of the submodules (20), and a switchover between a first voltage (51) and a second voltage (52) takes place due to the switching operations of the power semiconductors (41) of the submodules (20) with a different slew rate (53),
**characterised in that** the switchover, due to a correspondingly slow switching behaviour of the power semiconductors (41), takes place such that the temporal behaviour for the switching process between the first voltage (51) and the second voltage (52) corresponds to a ramp with a continuous characteristic.

2. Method for operating a modular current converter (1) according to claim 1, **characterised in that** the switchover between the first voltage (51) and the second voltage (52) due to the switching operations of the power semiconductors (41) of the submodules (41) takes place with a predetermined slew rate (53).

3. Method for operating a modular current converter (1) according to one of claims 1 or 2, **characterised in that** the slew rate (53) of the switchover between the first voltage (51) and the second voltage (52) due to the switching operations of the power semiconductors (41) of the submodules (20) is predetermined, controlled or regulated such that the AC voltage at the AC voltage-side terminal (12) approaches the characteristic of a predeterminable reference voltage (55).

4. Method for operating a modular current converter (1) according to one of claims 1 or 2, **characterised in that** the slew rate (53) of the switchover between the first voltage (51) and the second voltage (52) due to the switching operations of the power semiconductors (41) of the submodules (20) is predetermined, controlled or regulated such that the AC voltage at the AC voltage-side terminal (12) approaches a sinusoidal characteristic.

5. Method for operating a modular current converter (1) according to one of claims 1 to 4, **characterised in that** a selection of the submodules (20) for the switching operations takes place as a function of the temperature of the power semiconductors of the submodule and as a function of an anticipated, predicted or calculated power loss of the following switching processes such that the temperatures of the submodules (20), in particular the temperatures of the power semiconductors (41) of the submodules (20), are equal on average over time during the operation of the modular current converter (1).

6. Method for operating a modular current converter (1) according to one of claims 1 to 5, **characterised in that** the gradient of the switching process is varied by means of the actuation circuit of the power semiconductors (41) .

7. Method for operating a modular current converter (1) according to one of claims 1 to 6, **characterised in that** the switchover of the voltages at the submodules is modified such that the perpendicular edges cease to exist.

8. Modular current converter (1) with a plurality of submodules (20) for carrying out the method according to one of claims 1 to 7, wherein the modular current converter has
- a DC voltage terminal (13),
- at least one AC voltage-side terminal (12) and
- at least one phase module (10),
wherein the phase module (10) has a series connection of a first and a second current converter valve (11a, 11b), wherein an electrical connection between the first and the second current converter valve (11a, 11b) represents the AC voltage-side terminal (12), wherein terminals (14) of the phase module (10) are connected electrically with the DC voltage terminal (13), wherein the first and the second current converter valve (11a, 11b) in each case have at least two of the submodules (20), which are arranged electrically in series, wherein the submodules (20) have at least one capacitor (42) and at least two power semiconductors (41), wherein the power semiconductors are embodied such that their switching behaviour can be influenced with the aid of the use of intelligent actuation circuits, and said actuation circuits are configured to design the switchover between the first and second voltage with a variable gradient, wherein the submodules have means for achieving a slow switching behaviour of the power semiconductors, and the switchover of the power semiconductors in this context takes place such that the temporal behaviour for the switching process between the first voltage and the second voltage corresponds to a ramp with a continuous characteristic.

9. Modular current converter (1) according to claim 8, wherein the submodules (20) have precisely one capacitor (42).

10. Modular current converter (1) according to claim 9, wherein the submodules (20) have precisely two power semiconductors (41).

## Revendications

1. Procédé pour faire fonctionner un onduleur (1) modulaire ayant une pluralité de sous-modules (20), l'onduleur (1) modulaire produisant, à au moins une borne (12) du côté de la tension alternative, une tension alternative par des manipulations de coupure de semi-conducteurs (41) de puissance des sous-modules (20),
et une commutation entre une première tension (51) et une deuxième tension (52) s'effectuant par des manipulations de coupure des semi-conducteurs (41) de puissance des sous-modules (20) à une raideur (53) de front différente, **caractérisé en ce que** la commutation s'effectue par un comportement de coupure lent, adéquate des semi-conducteurs (41) de puissance, de manière à ce que la réponse temporelle pour l'opération de commutation entre la première tension (51) et la deuxième tension (52) corresponde à une rampe à courbe continue.

2. Procédé pour faire fonctionner un onduleur (1) modulaire suivant la revendication 1, **caractérisé en ce que** la commutation entre la première tension (51) et la deuxième tension (52), par des manipulations de coupure des semi-conducteurs (41) de puissance des sous-modules (41), s'effectue à une raideur (53) de front donnée à l'avance.

3. Procédé pour faire fonctionner un onduleur (1) modulaire suivant la revendication 1 ou 2, **caractérisé en ce que** la raideur (53) de front de la commutation entre la première tension (51) et la deuxième tension (52), par des manipulations de coupure des semi-conducteurs (41) de puissance des sous-modules (20), est donnée à l'avance, commandée ou régulée, de manière à ce que la tension alternative à la borne (12) du côté de la tension alternative se rapproche de la courbe d'une tension (55) de référence pouvant être donnée à l'avance.

4. Procédé pour faire fonctionner un onduleur (1) modulaire suivant la revendication 1 ou 2, **caractérisé en ce que** la raideur (53) de front de la commutation entre la première tension (51) et la deuxième tension (52), par des manipulations de coupure des semi-conducteurs (41) de puissance des sous-modules (20), est donnée à l'avance, commandée ou régulée, de manière à ce que la tension alternative à la borne (12) du côté de la tension alternative se rapproche d'une courbe sinusoïdale.

5. Procédé pour faire fonctionner un onduleur (1) modulaire suivant l'une des revendications 1 à 4, **caractérisé en ce qu'**une sélection des sous-modules (20) pour les manipulations de coupure s'effectue en fonction de la température des semi-conducteurs de puissance des sous-modules et en fonction d'une puissance de perte escomptée, pronostiquée ou calculée des opérations de coupure suivantes, de manière à ce que les températures des sous-modules (20), notamment les températures des semi-conducteurs (41) de puissance des sous-modules (20), soient les mêmes en moyenne dans le temps pendant le fonctionnement de l'onduleur (1) modulaire.

6. Procédé pour faire fonctionner un onduleur (1) modulaire suivant l'une des revendications 1 à 5, **caractérisé en ce que** l'on modifie la raideur de pente de l'opération de coupure au moyen du circuit de commande des semi-conducteurs (41) de puissance.

7. Procédé pour faire fonctionner un onduleur (1) modulaire suivant l'une des revendications 1 à 6, **caractérisé en ce que** l'on modifie la commutation des tensions aux sous-modules, de manière à supprimer les fronts verticaux.

8. Onduleur (1) modulaire ayant une pluralité de sous-modules (20) pour effectuer le procédé suivant l'une des revendications 1 à 7, dans lequel l'onduleur modulaire a
- une borne (13) de tension continue,
- au moins une borne (12) du côté de la tension alternative et
- au moins un module (10) de phase,
dans lequel le module (10) de phase a un circuit série d'une première et d'une deuxième soupapes (11a, 11b) d'onduleur, une liaison électrique, entre la première et la deuxième soupapes (11a, 11b) d'onduleur, représentant la borne (12) du côté de la tension alternative, des bornes (14) du module (10) de phase étant connectées électriquement à la borne (13) de tension continue, la première et la deuxième soupapes (11a, 11b) d'onduleur ayant chacune au moins deux des sous-modules (20), qui sont montés en série électriquement, les sous-modules (20) ayant au moins un condensateur (42) et au moins deux semi-conducteurs (41) de puissance,
dans lequel les semi-conducteurs de puissance sont constitués de manière à pouvoir influencer leur comportement en commutation à l'aide de l'utilisation de circuits de commande intelligents et ces circuits de commande sont conçus pour conformer la commutation entre la première et la deuxième tension par une raideur réglable,
dans lequel les sous-modules ont des moyens d'obtention d'un comportement de commutation lent des semi-conducteurs de puissance et la commutation des semi-conducteurs de puissance s'effectue de manière à ce que la réponse temporelle, pour l'opération de commutation entre la première tension et la deuxième tension, corresponde à une rampe à courbe continue.

9. Onduleur (1) modulaire suivant la revendication 8, dans lequel les sous-modules (20) ont exactement un condensateur (42).

10. Onduleur (1) modulaire suivant la revendication 9, dans lequel les sous-modules (20) ont exactement deux semi-conducteurs (41) de puissance.
